# EUROPEAN PATENT SPECIFICATION

(11) **EP 2 658 710 B1**
(45) Date of publication and mention of the grant of the patent: **07.10.2015**
(21) Application number: 11729344.9
(22) Date of filing: 27.05.2011
(51) Int. Cl.: B32B 3/16, B32B 7/14, B32B 21/10, B29C 70/08

(54) **CONTOURABLE CORE FABRIC AND METHOD OF MAKING SAME**
KONTURIERBARES KERNGEWEBE UND HERSTELLUNGSVERFAHREN DAFÜR
TISSU-NOYAU FAÇONNABLE ET SON PROCÉDÉ DE FABRICATION

(30) Priority: 29.12.2010 US 980835
(43) Date of publication of application: 06.11.2013
(73) Proprietor: Saint-Gobain ADFORS Canada, Ltd., Grand Island, NY 14072 (US)
(72) Inventor: NEWTON, Mark, Joseph, Tiny, ON L0L 2J0 (CA); SYED, Joe, Elmvale ON L0L 1PO (CA); HOOK, Kerry, D., East Amherst, NY 14051 (US); BROWN, Nancy, E., New Braintree, MA 01531 (US)
(74) Representative: Zimmermann & Partner Patentanwälte mbB
(86) International application number: PCT/US2011/038295
(87) International publication number: WO 2012/091751

(56) References cited:
- WO-A1-2010/108497
- GB-A- 1 215 538
- JP-A- 6 191 196
- US-A- 3 376 185

## Description

### FIELD

The present disclosure relates to fabrics generally, and more specifically to a scrim suitable for use in a contourable core.

### BACKGROUND

Composite core structures are used in wind turbine blades, airplanes, boat hulls and other structures that are very stiff, but light. Within these composite materials are cores made out of expanded polyvinyl chloride or other types of polymer foams or balsa wood. Such cores and their general construction are described in U.S. Patent Nos. 3376185, 3540967 and 4536427.

US 3 376 185 A relates to a tesselated contour core blanket which is constituted by an open mesh of non-stretchable, flexible scrim material formed of fiberglass threads, a layer of individual balsa blocks being secured to the mesh by parallel lines of pressure-releasable adhesive. The scrim has the features of the preamble of claim 1 and 13 respectively.

The core materials are sold in sheet form, and they can be cut to any shape. The core material starts out as a panel, such as a solid 4 x 8 sheet of PVC foam, of varying thickness depending on the application. The sheet is sent through a machine which has a steel roller. The roller is heated with hot oil and over top of the panel a fabric is fed from a roll. The fabric has a water based adhesive coating on one major face of the fabric. The fabric is an open mesh that weighs about 60 grams per square meter.

The fabric and panel are fed through the rotating roller that applies heat and pressure to activate the fabric onto the core.

Once the fabric is laminated to the panel, the panel is fed through another machine that scores it down the length and across to turn the board into a mosaic pattern of evenly spaced blocks.

From there the board goes to a bending machine that breaks the scores all the way through and then, at that point, the panel is held together by the fabric.

Improved contourable cores and methods of fabricating the cores are desired.

### SUMMARY

In some embodiments, a method comprises providing an open weave fiber glass scrim and printing a discontinuous pattern of an ethylene vinyl acetate (EVA) hot melt adhesive on a major surface of the open weave fiber glass scrim, the adhesive having sufficient viscosity at an application temperature used during the printing step to avoid wicking through the scrim.

In some embodiments, a product comprises an open weave fiber glass scrim; and a discontinuous pattern of EVA hot melt adhesive applied on one side of the open weave fiber glass scrim without bleeding through the scrim.

In some embodiments, a method of using the product comprises laminating the scrim to at least one panel from the group consisting of expanded polymer foam and wood, with the adhesive joining the scrim to the panel; and slitting the foam or wood in two directions without slitting the scrim to form a contourable core material having a plurality of blocks attached to the scrim.

### BRIEF DESCRIPTION OF THE DRAWINGS

FIG. 1 is an enlarged view of a scrim having a discontinuous pattern of hot melt adhesive printed on the scrim.
FIG. 2 is a perspective view of the scrim of FIG. 1 adhered to one major surface of an array of polymer foam (or balsa) core material blocks.
FIG. 3 is a perspective view of a composite core including the scrim and core material of FIG. 2.
FIG. 4 is a diagram of a processing equipment line for applying the hot melt adhesive to the scrim of FIG. 1.
FIG. 5 is an enlarged detail of a surface of a cross-hatch gravure roll for printing the adhesive on the scrim of FIG. 1.
FIG. 6 is an enlarged detail of a surface of an alternative gravure roll for printing the adhesive on the scrim of FIG. 1.
FIG. 7 is a photograph of an enlarged detail of the scrim of FIG. 1, with a different adhesive pattern.
FIG. 8 is a diagram showing comparative adhesive test results.

### DETAILED DESCRIPTION

This description of the exemplary embodiments is intended to be read in connection with the accompanying drawings, which are to be considered part of the entire written description. In the description, relative terms such as "lower," "upper," "horizontal," "vertical,", "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description and do not require that the apparatus be constructed or operated in a particular orientation. Terms concerning attachments, coupling and the like, such as "connected" and "interconnected," refer to a relationship wherein structures are secured or attached to one another either directly or indirectly through intervening structures, as well as both movable or rigid attachments or relationships, unless expressly described otherwise.

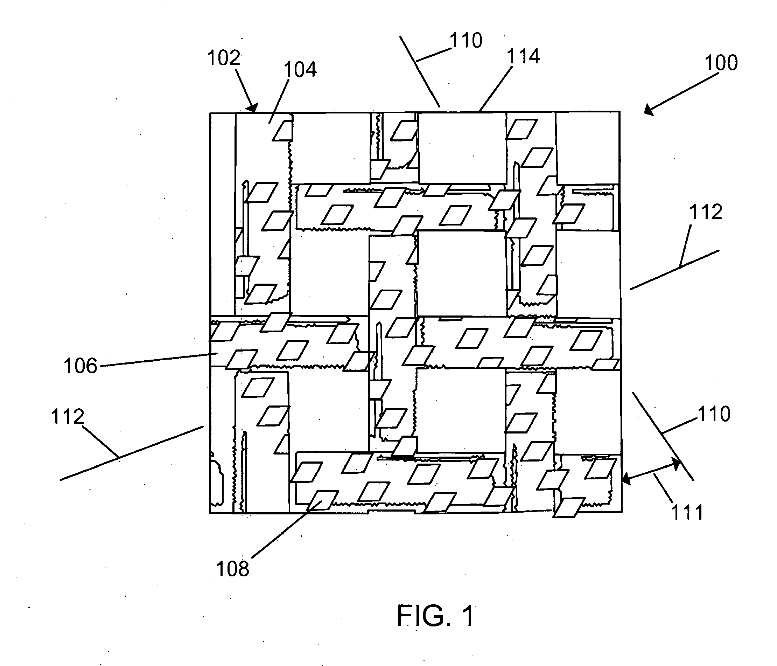

FIG. 1 is an enlarged detail of a product 100, comprising an open weave fiber glass, kevlar or carbon scrim 102 and a discontinuous pattern of hot melt adhesive 108 applied on one side of the open weave fiber glass scrim 102 without wicking or bleeding through the scrim. In some embodiments, the product comprises an open weave fiber glass scrim 102 and a discontinuous pattern of EVA hot melt adhesive 108 applied on one side of the open weave fiber glass scrim 102

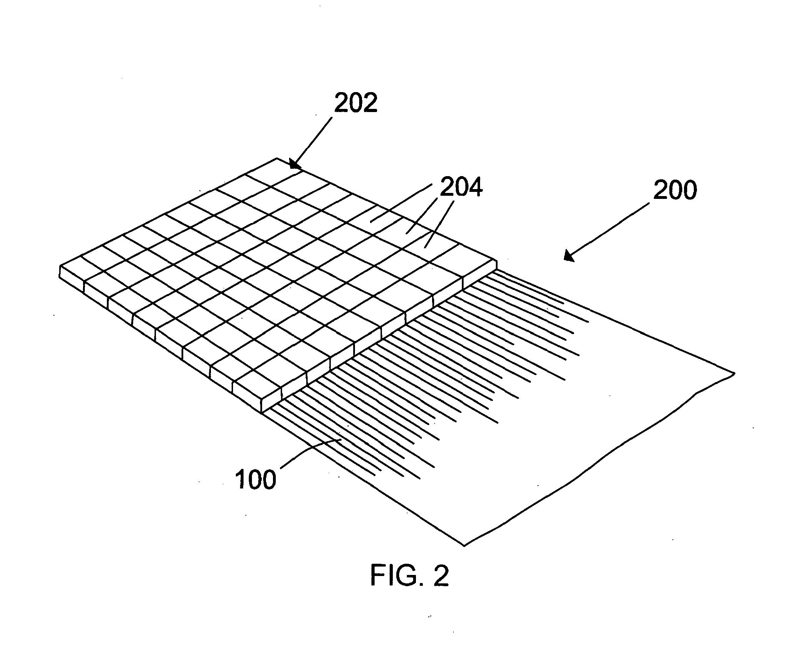

The completed fabric 100 is suitable for use in contourable cores 200. FIG. 2 shows a laminate 200 including a panel 202 of contourable core material joined to the fabric 100 (including scrim 102 and adhesive 108). Contourable core 200 may be made from a variety of core materials, such as expanded PVC foam (or other polymer foam), or light wood such as balsa. The contourable core 200 is made by laminating the fabric 100 to at least one panel 202 from the group consisting of expanded polymer foam and wood, with the adhesive 108 joining the scrim to the panel. In some embodiments, a nip roll temperature of 102.8°C (217° F) is used, with a line speed of 9.4 cm/sec (0.31 ft/sec). The resulting fabric 100 has a thickness of 0.20 to 0.25 mm, a Tensile Strength of 750 N/50 mm minimum in warp direction. The foam or wood 202 is slit in two directions without slitting the fabric 100 to form a contourable core material 200 having a plurality of blocks 204 attached to the scrim 102. In some embodiments, fabric of width 1210 to 1220 mm fringe to fringe is provided, for example.

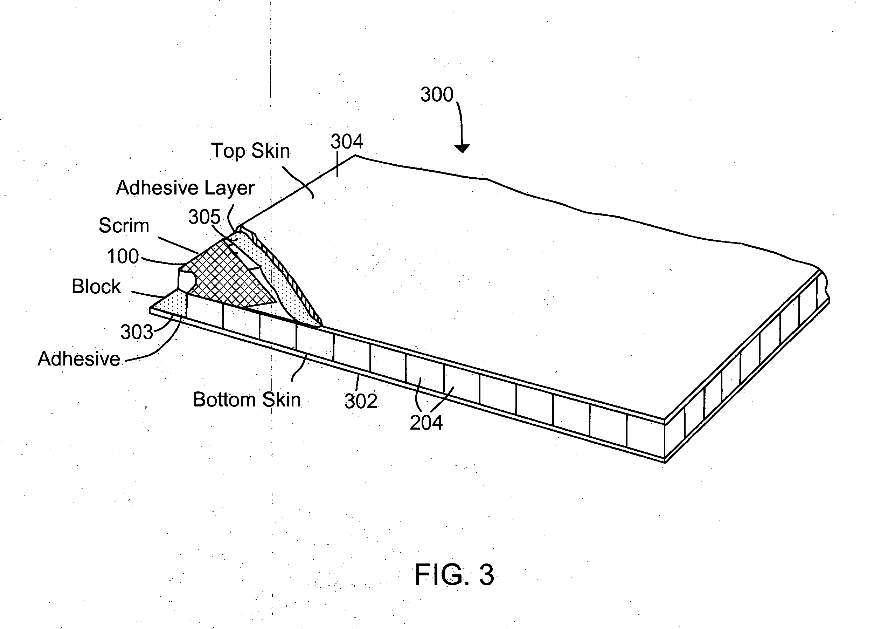

FIG. 3 shows a laminated sandwich structure 300 including the laminate 200 of FIG. 2. A bottom skin 302 and top skin 304 are laminated to both major faces of the core 200 by further adhesive layers 303 and 305, respectively. The sandwich structure 300 has a high stiffness to weight ratio, suitable for applications such as wind turbine blades, aircraft, boat hulls, or the like.

### Fibers

Fibers may be used to make the yarns of scrim 102. The following fibers may be used to form a fabric for a contourable core backing.
- Fiberglass: various glass formulas are available: A glass; E glass; C glass; AR glass; S glass; etc, Fiberglass provides both low cost and tensile rigidity.

In some embodiments, the scrim 102 is a greige scrim, without any sizing applied to it prior to the application of the adhesive 108. Other embodiments include glass fibers that are supplied with a starch/oil based size on the fibers to facilitate weaving of the fibers on a loom. This can avoid damage to fiberglass in the weaving process. However, adhesion of resins (epoxy, phenolic; unsaturated polyester, etc) to the glass fibers may be better without the starch/oil size. In some embodiments, the glass fibers are "Direct Sized," i.e., the size on the glass is polymer based and contains silane coupling agents such that resins will bond covalently to the glass fibers and improve the strength properties of the composite structure.

In the example, the weave is a plain weave, with the weft yarns 106 alternately passing over and under the warp (machine direction) yarns 104. Table 1 provides an example of a fiberglass scrim fabric construction suitable for this purpose.

**Table 1**

| Property | Imperial | Metric | |
|---|---|---|---|
| Construction: | Warp: 12.6 (per inch) | 49.48 (per 10cm) | ASTM D-3775 |
| | Weft: 9.9 (per inch) | 39.00 (per 10cm) | |
| Weight: | 1.8 (oz/yd2) | 61.3 (g_{/}m²) | ASTM D-3776 |
| Thickness: | 0.004 (per inch) | 0.103 (per mm) | ASTM-1777 |
| Weave: | Plain | Plain | |

Such a scrim is available from San Gobain Technical Fabrics, Grand Island, NY, as product No. 4586.2/1208. Such a fabric has been woven by the assignee using a dry warped beam. Compared to a slashed beam, the dry warp beam resulted in a cost savings as well as a flatter profile to the warp yarns. The flatter profile provides a higher surface area on the warp yarns for the application of adhesive 108. In some embodiments, the warp yarn count is 49.48 +/-4 per 10 cm.

### Adhesive

The adhesive 108 is applied in a discontinuous pattern using a gravure process, which can apply either a 100% solids or water based hot melt adhesive to print a discontinuous pattern of hot melt adhesive. For example, EVA adhesive may be provided in an aqueous carrier, or in pellet or bead form, in which case the solid EVA is melted and picked up by the gravure roll for printing the adhesive on the fabric 102. Other methods may apply a discontinuous film with a water based hot melt adhesive such as rotary screen printing, flexographic printing, or the like.

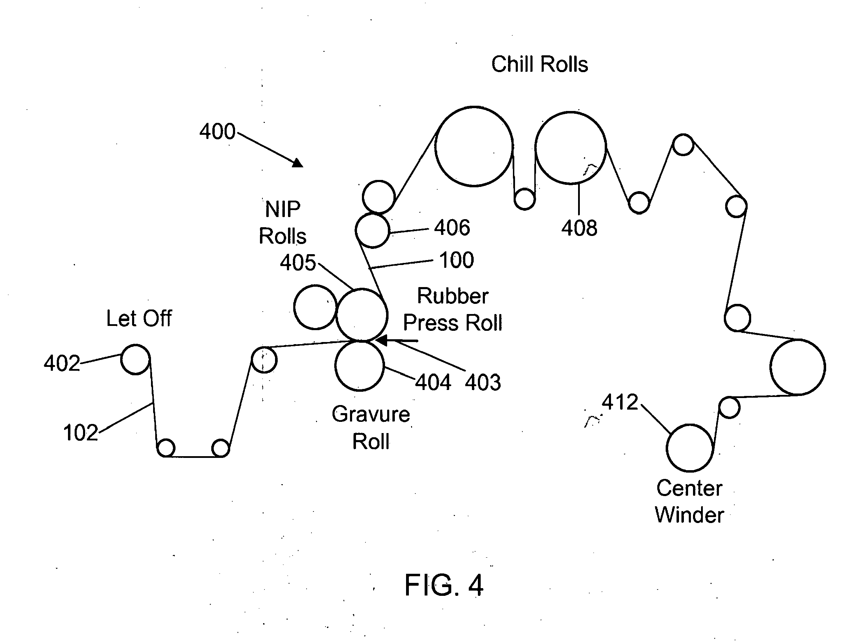

The discontinuous pattern is a pattern that repeats in the machine direction, as can be applied using a gravure roll 404 (FIG. 4). The pattern can include complete breaks (i.e., a line segment without adhesive, sandwiched between unconnected regions of adhesive), or isolated islands of bare yarn, each surrounded by regions of adhesive. In some embodiments, the discontinuous pattern includes a plurality of dots 108 having a variety of shapes, such as, but not limited to diamonds or circles, lines, hexagons, or the like. Thus, the discontinuous pattern only partially covers the major face of the scrim 102.

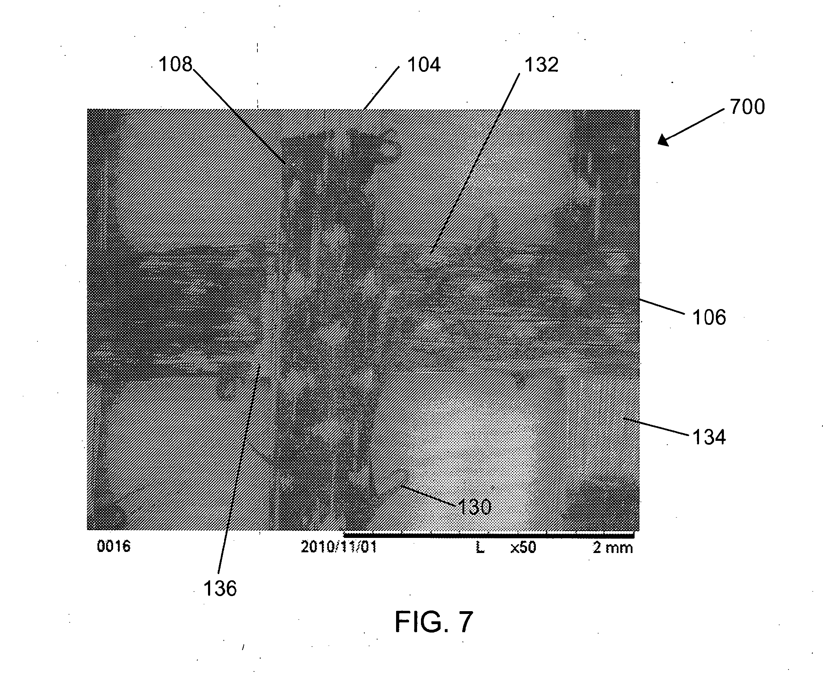

In other embodiments, the application method may include 100% hot melt spray systems; extruded lines; hot melt adhesive webs laminated on the fabric, rotary screen printing, flexographic printing, or the like. For example, FIGS. 1 and 7 show a plurality of diamond shaped dots of adhesive. In FIG. 1, the diamond shaped dots 108 fall along lines 110 and 112, which are offset by respective angles from the machine direction. In some embodiments, lines 110 and 112 are each offset from the machine direction by an angle 111 in the range from 30° to 60°.

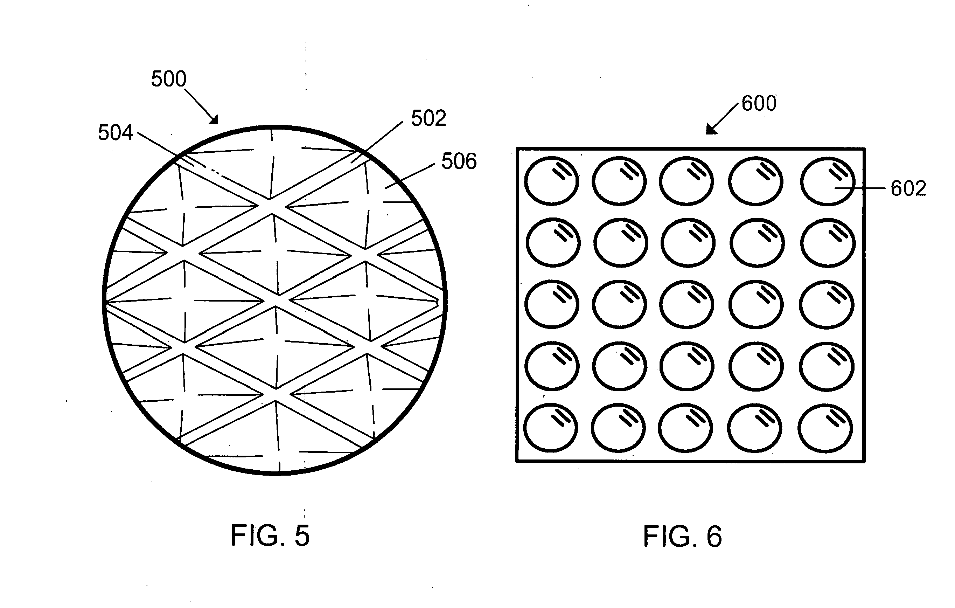

In some embodiments, the adhesive 108 is applied in the form of dots by a gravure roll such as the roll 600 shown in FIG. 6. The roll 600 has a plurality of concave depressions 602 which pick up adhesive for printing on the fabric. Although the depressions 602 are circular, other shapes such as squares, diamonds, hexagons, or the like may be used. For example, the adhesive 108 shown in FIG. 1 is deposited using a gravure roll with diamond shaped depressions.

The fabric 100 produced by the dot gravure process is free of adhesive covering the openings 114 in the fabric 102. This process has low probability of adhesive 108 saturating or wicking into the fibers 104, 106. It provides a reliable way to meet adhesive level specifications consistently. The dot gravure process also avoids distorting the weft yarns 106 in the greige fabric 102. The dot gravure approach allows the machine to be run at very high speeds, and the adhesive pickup is independent of line speed. The discrete nature of the dots 108 may yield an advantage in terms of resin penetration through the fabric and perhaps increased shear properties in the sandwich structure. The extra height of the dots may result in more efficient adhesion of the fabric to the cores with potential raw material savings resulting. The dot process can also uses relatively low cost raw materials, such as EVA hot melt in pellet form.

In other embodiments, the discontinuous pattern comprises a plurality of lines and/or curves. FIG. 7 is a photograph showing an adhesive pattern formed by a gravure roll 404 having a plurality of engraved lines 502, 504 (as shown in FIG. 5), defining a plurality of diamond shaped raised areas 506. In FIG. 7, the darkened areas represent the adhesive pattern, and the light areas 132 are bare yarns 104, 106, corresponding to the diamond areas 506 of the gravure roll. Also, light areas 134 are bare yarn regions corresponding to locations where the weft yarns 106 cross under the warp yarns 104. Even in the case where the gravure roll 404 has continuous lines or curves (e.g., FIG. 5), the nature of the printing process is such that the deposited adhesive lines are only applied on the yarns 104, 106 of the scrim 102, and do not bridge the openings 114 of the open weave, and do not cover portions 134 of the warp yarns 104 immediately adjacent to where they cross under the weft yarns 106. Similarly, the adhesive lines do not cover regions 136 of the weft yarns 106 immediately adjacent to where they cross under the warp yarns 104. The adhesive 108 is only picked up by the yarns 104, 106 of the scrim where the yarns contact the gravure roll during printing.

A discontinuous pattern of hot melt EVA adhesive has several benefits. The scrim 100 with this adhesive pattern resists "blocking". At the end of the line, the center winder 412 winds the fabric 100 into a hard, square ended, adhesive coated roll suitable for shipping in containers world wide without damage in transit. If a fabric can adhere to itself, this condition is referred to as "blocking", which makes it very difficult to dispense the fabric from the roll. Using the discontinuous pattern of hot melt EVA adhesive, blocking is avoided, without the need for a release liner.

Further, using the discontinuous pattern of hot melt EVA adhesive, both the weight and cost of the adhesive are reduced relative to a continuous film of adhesive. Further, the gaps in between regions of the adhesive 108 permit ingress of a second adhesive 305 (FIG. 3) that is used to laminate the top skin 304 to the core material scrim 100 to form the structural sandwich material 300.

In some embodiments, the adhesive has an average area density of 5 grams/meter² to 28 grams/meter². In some embodiments, the discontinuous pattern of adhesive includes adhesive with an average area density of 20 grams/meter² to 27 grams/meter², arranged in line segments lying along lines oriented in two different directions to form a grid of lines. In some embodiments, the gravure roll is a cross hatch roll having line segments spaced at from 10 to 55 (preferably 25 to 55) parallel lines per inch (4 to 22 - preferably 10-22 - parallel lines per centimeter) in at least one direction.

In some embodiments, the adhesive has a softening point in a range from 60 °C to 90 °C. A softening temperature from 65 °C to 90 °C it preferred and a softening temperature from 70 °C to 90 °C is more preferred. In some embodiments, the softening temperature of the EVA adhesive material is about 75 °C. In general, the higher the softening temperature of the hot melt EVA adhesive, the less likely blocking is at any given storage temperature. If the softening temperature is greater than the highest expected storage temperature and the highest expected shipping temperature, then the risk of blocking is greatly reduced, and costly blocking avoidance measures (e.g., refrigeration or a release layer) are avoided.

In general, higher viscosity prevents wicking into the loom-state fabric during application and during the customers nip rolling process (to attach the skins 302 and 304 to the core material 204 and scrim 100). However providing a distinct, clean print of adhesive that is free of hairs favors a low viscosity adhesive. In some embodiments, the viscosity at the application temperature is in a range from 10,000 to 60,000 centipoises at 191 °C. Experiments showed that for adhesive viscosity below 10,000 centipoises at 191 °C, wicking through the fabric is more likely to occur, despite the use of a chilled press roller. When the adhesive 108 passes through the open areas 114 in the fabric 102, or wicks through the fabric, it contaminates the rubber press roller 405 (FIG. 4). The process cannot continue for more than a few minutes when this occurs, and also the fabric is not fit for use in the customers nip roll process, due to the adhesive that accumulates on the back of the fabric 102. Strings or angel hair could be generated if the adhesive film splits between the fabric and gravure roll. Strings push through the openings in the fabric, collect on the press roller; and eventually deposit on the backside of the fabric, which is a fault known as "strike through".

In some embodiments, for applying the hot melt EVA to the scrim 100 at 191° C, the adhesive should have a viscosity from 5700 cps to 35,000 cps.

The selected adhesive should have good reactivation behavior. The adhesive should be free of cross linking or other behavior that inhibits its melting a second time in the customer's process to laminate the skins 302, 304 to the core material 204 and scrim 100, respectively.

Preferably, the adhesive has a short open time, such as three seconds or less, which reduces the chance of blocking. Coatings grade polymer adhesive provides a shorter open time than adhesive grade polymer for this use. An adhesive providing high hot tack has good grab to the core in its hot state, to provide good fundamental adhesion to PVC foam or balsa wood panel 202. Tack is not a requirement once adhesive is cooled.

Ethylene vinyl acetate or EVA is available as aqueous dispersions but more readily available as hot melt solids. In some embodiments, hot melt solid EVA pellets are melted to provide the adhesive which is picked up by the gravure roll 404 and deposited on the scrim 102.

Alternative adhesive are available, which are reactivatable via melting with heat. The heat reactivatable aspect is characteristic of "thermoplastic" polymers. Further, such polymers may be available as aqueous dispersions that are applied to the fabric and then dried with heat in an oven; or applied as 100% solids materials that are first melted to liquefy them so that they can be applied and then simply cooled so that they become solid again. Some examples of alternative adhesive options include, but are not limited to:
- Ethylene acrylate,
- Polyacrylate and copolymers of polyacrylate,
- Polyolefin's: such as low density polyethylene; high density polyethylene; atactic polypropylene; polybutene-1; amorphous polyolefin's; etc,
- Polyesters and copolyesters,
- Polyamides,
- Polyurethanes,
- Styrene block copolymers: such as styrene-butadiene-styrene; styrene-isoprene-styrene; styrene-ethylene/butylene-styrene; styrene-ethylene/propylene; etc
- Polycaprolactone,
- Polycarbonate,
- Fluoropolymers,
- Thermoplastic elastomers,
- Polypyrrole,

Preferably, the selected adhesive is not humidity sensitive; as such sensitivity can lead to tackiness, and increase risk of blocking. Preferably, the adhesive has a shelf life at least one year from date of manufacture in dry and cool (15° to 25° C) conditions. Preferably the adhesive has good oxidation and color stability characteristics in the melt.

In some embodiments, a hot wire may be used for cutting any strings that may be formed normal to the fabric surface.

FIG. 4 is a schematic diagram of a process for printing the adhesive 108 on the scrim 102. The scrim is provided from a let off roll 402. The scrim passes between the gravure roll 404 and the rubber press roll 405. The gravure roll 404 picks up the hot melt EVA adhesive, e.g., in the form of melt formed from solid pellets. Gravure roll 404 prints a discontinuous pattern of an ethylene vinyl acetate (EVA) hot melt adhesive 108 on a major surface of the open weave fiber glass scrim 102, the adhesive having sufficient viscosity at an application temperature used during the printing step to avoid wicking through the scrim. In some embodiments, the method further comprises directing hot air using a hot air knife 403 directed at a gap between the gravure roll 404 and the scrim 102.

The fabric 100 including the adhesive 108 may optionally be drawn from the gravure roll 404 by the nip rolls 406, which also press the cooling hot melt adhesive into the scrim 102 of the fabric 100. The nip rolls 406 may also smooth out the surface of the adhesive on the coated fabric. The web 100 is then fed around chill rolls 408 to chill the adhesive below its softening point. For example, the chill roll temperature may be set so that the temperature of the fabric leaving the chill rolls 408 is less than 90 ° C, preferably less than 75 ° C, and more preferably less than 60 ° C. The chilled fabric 100 is then wound tightly into a square ended roll by center winder 412. The web of fabric 100 wound into a single roll may include 1000 meters of fabric, for example.

FIG. 5 shows a gravure roll 500 having an engraved pattern of parallel lines in each of two directions. The lines in roll 500 are not orthogonal, resulting in a pattern of diamond shaped regions. In other embodiments, orthogonal lines form a pattern of rectangular shaped regions. In some embodiments, the gravure roll 404 has a plurality of parallel lines spaced at 25 lines per inch 10 lines per cm at 0.009 inches (0.23 mm) deep. In some embodiments, the gravure roll 404 has a plurality of parallel lines spaced at 55 lines per inch 22 lines per cm at 0.006 (0.15 mm) inches deep. In general, as the number of lines per inch increases, the depth of the lines can become shallower in order to achieve a desired weight per unit area of adhesive and a desired adhesion target (e.g., shear strength).

In experiments, when the 55 lpi (22 lpcm) gravure roll 404 was used, an adhesive add on level reached about 20 g/m², and no strike through was observed. The result was achieved over a wide range of adhesive viscosity, which yields greater freedom in adhesive selection and a larger window of capability for the process. Samples made at 20 g/m² with the 55 line per inch (22 lines per cm) roller showed the fabrics to have excellent adhesion to the foam substrates and the fabric met the tensile and thickness requirements.

In some embodiments, a hot air knife is directed against the roller gap (between the roller and the fabric) is used for eliminating adhesive "curlicues" 130 (FIG. 7).

In some embodiments, a surface winder 412 (FIG. 4) is installed on the line 400 to be able to wind rolls to the required hardness for shipping.

An advantage with the fabric 102 having a hot melt EVA adhesive is that the fabric can be laminated to dry balsa core material 204 (FIG. 2). No water pre-soak is needed on the fabric 100 to facilitate adhesion to a balsa panel 202. It is customary when using a scrim having a water based adhesive to first pre-soak the fabric or the core before laminating the scrim and core material 202.

Shear tests showed that 20 g/m² of qualified adhesive on the fabric provides sufficiently strong bonds that the core material failed before the scrim with a discontinuous pattern of hot melt EVA delaminated from the core material 204. A fabric with a much lower level of adhesive will adhere well to foam. An adhesive area density of 5 g/m² or more should provide sufficient adhesion. Further an adhesive area density of 12 g/m² or more enhances material handling material handling characteristics. Using 20 g/m² or more has the added function of providing stability of the fabric, relative to an adhesive level below 12 g/m². With 20 g/m² or more of adhesive, the fabric is less likely to distort during handling and is easily cut with scissors, because the adhesive volume helps to hold the weave intact. The gravure process is believed to be capable of control to within +/- 1 g/m².

During testing, if the roller passed over the adhesive area of the strip for 2 seconds (2.54 cm/s) or longer, adhesion was initiated with most adhesives. At 5 seconds (1.02 cm/s), all of the adhesives were securely fastened without the adhesive flowing away from the bond line. Thus, times of two to five seconds are suitable. Note that the 2 and 5 second durations were suitable for identifying differences in adhesion during lab testing. However, on an actual contourable core production line, the speeds used were between 4 and 10 times faster than those used in the lab tests.

### Examples

Lap shear tests were performed using a variety of adhesives, including several steps:
1) Preparation of the fabric test specimens and foam or balsa substrate
2) Assembly of the fabric specimens to the substrate
3) Measurement of the maximum shear force to remove the fabrics from the substrate
4) Logging and analysis of the results

The control specimens used a commercially available Gavazzi (Gav) fabric, sold by GAVAZZI TESSUTI TECNICI S.p.A. of Calolziocorte, Italy. In addition to testing of several Jowat EVA adhesives (sold by Jowat, AG of Detmold, Germany), EMS copolyester adhesives (sold by EMS-CHEMIE North America Incorporated, Sumter, SC) were tested.

The approach in the lab was to mimic the final product 100 as closely as possible in terms of the location and amount of adhesive on the fabric. A style 0004 fabric was chosen for its areal weight and openness, and it was coated with 281 Finish to stabilize it for cutting and handling. Using coated fabric also eliminated the possibility of adhesive wicking through so that it would be inclined to stay at the bond line and not confound the results.

As long as the lap shear failure occurred in the foam itself; between the adhesive and the foam; or in the adhesive itself, conclusions could be drawn about the ability of the adhesive to bond to the substrate. If the failure occurred between the coated fabric and the adhesive, this would be noted and taken under consideration. The 281 Finish was chosen since it did not contain releases agents that could lead to failure of the bond between the fabric and the adhesive.

A roll of 0004/281 fabric was procured from inventory and strips of 25.4 cm x 4.8 cm in size were cut across the width of the fabric. The 25.4 cm dimension was parallel to the warp direction. The strips were numbered in sequence and weighed on an analytical balance to 0.0001 grams.

The following procedure was used to apply adhesive to the above strips. An aluminum plate of 43 cm x 30 cm in area and 1.3 cm thick was placed in the lab oven at 150° C and left to equilibrate for several hours. About 1 tablespoon of a given adhesive, usually in pellet form, was sprinkled on the hot plate in a lengthwise direction down its center and left for at least 10 minutes to melt. A draw down bar was made by using a flangeless test tube of about 2 cm diameter and wrapping either masking tape or scotch tape or both around its circumference at two places separated by a distance of 5.1 cm from tape edge to tape edge. The test tube was placed in the oven along with the adhesive to equilibrate. The tube was drawn lengthwise down the hot plate by hand and over the adhesive to make a film that was 5.1 cm across and about 35 cm long. The fabric strips were quickly placed onto the film at 90° to the length of the film, with the end of the fabric lined up with the edge of the film, to form an area of intersection of 5.1 cm x 4.8 cm. The fabric was not pressed into the adhesive film, rather it was left until the adhesive wet out the fabric, which was obvious by a change in the opacity of the fabric. The strips were then peeled off the film fairly quickly and placed outside the oven to cool. At this point a quantitative determination could be made of the open time of the adhesive by measuring how long it took for the tack to disappear to the touch.

Once cool the strips were reweighed on the analytical balance. By subtracting the original weight of the strip from the coated weight the amount of adhesive added on to the fabric could be determined very accurately. By dividing that weight in grams by the adhesive coated area (0.051 m x 0.048 m) the areal weight of the adhesive could be determined and compared to the target level. By varying the thickness of the tapes and the number of wraps around the test tube the adhesive target level could be approached in a reasonably repeatable fashion.

The core material substrate consisted of Diab PVC foam board or balsa board that was 1.27 cm thick and cut to 10.16 cm x 7.62 cm in size.

The method used to attach the fabric to the substrate was to heat the standard 2 kg steel Fibatape roller in the lab oven along with the hot plate to 150° C. Two rollers were heated so that they could be used in an alternating fashion so that 6 or 12 specimens could be attached to substrates in batch wise fashion such that the rollers did not cool too far.

The adhesive covered area of the fabric specimen was placed on the substrate parallel to the long direction of the substrate and centered on the narrower side such that such that 1.26 cm of space was present on each side of the strip and 20.3 cm of strip overhung the substrate. The roller could then be passed over the fabric and substrate intersection with constant pressure as long as no down force was applied to the handle to activate the adhesives in a repeatable fashion without it flowing away from the bond line or melting the PVC substrate, so that the bond of different adhesives could be assessed and compared.

If the time was 2 seconds (2.54 cm/s), adhesion was initiated with most adhesives. At 5 seconds (1.02 cm/s), all of the adhesives were securely fastened without the adhesive flowing away from the bond line. Given the sensitivity of the adhesion to the rolling rate, all of the testing was conducted at two rolling durations: 2 seconds and 5 seconds.

The test specimens made above were inserted vertically into an Instron tester equipped with upper and lower jaw facings of dimensions 5.1 cm x 7.6 cm and a gap of 20.3 cm. The lower jaw overlapped the foam or balsa substrate by 5.1 cm or just up to but not covering the fabric strip. The upper end of the fabric strip was clamped in the top jaw for the height of the jaw or 5.1 cm. The air pressure fed to the pneumatic jaws is to adequately clamp the foam but not crush it; the pressure was set to 40 psi (2,76 Bar). The top of the strip was clamped first; the specimen was pulled taught; and then the lower jaw was clamped on the foam. Every effort was made by the operator to make sure the specimen was centered in the jaws and was parallel to the direction of travel of the jaws.

The cross head speed of the Instron was set to 100 mm/min. Once clamped, the Instron was started and the test progressed until the specimen ruptured.

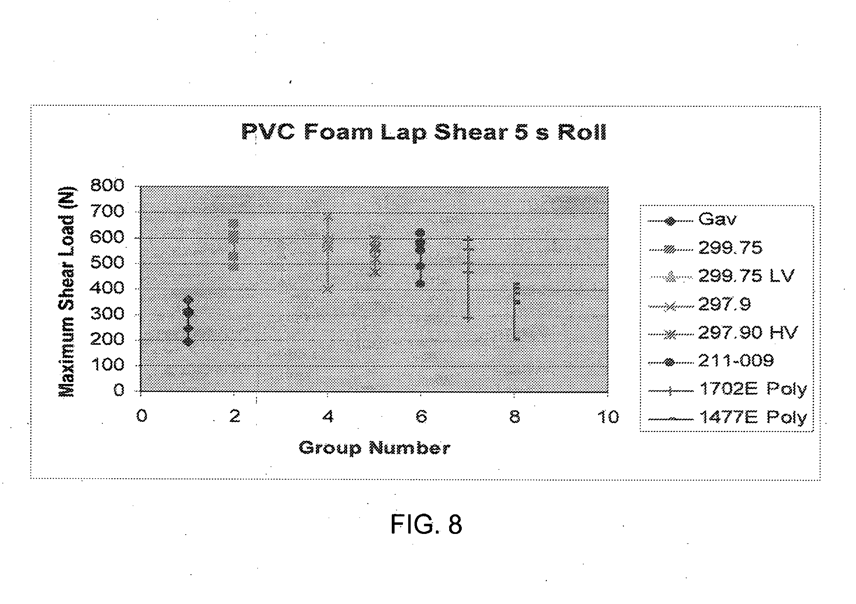

The data are reproduced in a Table 2 below for foam core substrate. Table 2 includes data for fabric prepared by hand in the lab; the adhesives were applied on 0004 fabric manually. The lap shear specimens in Table 2 were strips of fabric welded to an area of foam using the hot steel roller in the lab. Thus, the data of Table 2 are more relevant for comparing adhesives to each other, and are not intended to represent absolute values to be achieved using mass production line equipment. Figure 8 and Table 3, on the other hand, show data gathered using 4586 fabric (as specified in Table 1) coated on pilot lines and are thus more representative of performance that may be achievable using mass production equipment. The lap shear specimens of Table 3 were made in the same way with strips cut from the adhesive coated fabric welded to an area of foam using the hot steel roller. FIG. 8 shows the comparative test data for several different adhesives using the pilot line equipment. However the same method was used to test the performance of either type of strip (Tables 2 and 3) by laminating it to foam with a hot roller and measuring the force to pull the fabric off.

**Table 2 - Adhesive Screening Test Results**

| **Adhesive** | **Softening Point (°C)** | **Open Time (s)** | Viscosity (cp) @ temp. (**°**F) | | | **Coating Add On (%) Avg. 12** | **Lap Shear (N) Average** | | | |
|---|---|---|---|---|---|---|---|---|---|---|
| | | | **325** | **350** | **375** | | **Fast** | **Mode** | **Slow** | **Mode** |
| Jowat 67 261.60 | 91 | 5 to 7 | 147000 | 96000 | 66000 | 23 | 256 | Adhes. | 437 | Adhes. |
| Jowat 261.60 | 100 | 3 to 4 | 4100 | 2800 | 1800 | 23.5 | 334 | Adhes/ foam break | 504 | Foam break |
| Jowat 297.90 | 108 | Near 0 | 16000 | 14500 | 6500 | 23.3 | 543 | Foam break | 560 | Foam break |
| Jowat EXP 210 004 (297.90 HV) | 115 | Near 0 | 48500 | - | 20000 | 24 | 534 | Foam break | 425 | Foam break |
| Jowat 239.65 | 105 | Long | 13000 | 7500 | 6000 | 21 | 268 | Adhes. | 557 | Glue/ Fabric inter face |
| Jowat 299.75 | 75 | 3 | 85000 | 52000 | 35000 | 23.7 | 608 | Foam break | 656 | Foam break |
| Jowat EXP 211005 (299.75 LV) | 90 | 3 | 13400 | - | 6100 | 23.8 | 545 | Foam break | 467 | Foam break |
| Jowat 297.70 | 125 | Near 0 | 20000 | - | 10000 | 26.7 | 445 | Adhes. | 523 | Foam break |
| Jowat Exp 211009 | 90 | 3 | 12650 | - | 5700 | - | - | - | - | - |
| Bostik H1477 | 73 | ? | 2500 | 1750 | 900 | 22 | 530 | Foam break | 685 | Foam break |
| Reynco 53-025 | 70 | Med. | 9000 | 6000 | 4000 | 22.6 | 485 | Adhes/ Foam break | 546 | Foam break |
| Fuller HL-9939 M | ? | Short | 7675 | 5100 | 2500 | 23.3 | 108 | Adhes. | 398 | Glue/ Fabric inter face |

**Table 3 - Adhesion Testing of Plant Prototypes**

| **Adhesive** | **Lap Shear (N) 5 second roll** | **Lap Shear (N) 2 second Roll** | **Add-on (g/m²)** | **Comments** | **Softening Point (C)** | **Viscosity @ 190 C** | **Print Quality** |
|---|---|---|---|---|---|---|---|
| Gavazzi | 290 | | 27 | Adhesive failure | ? | ? | Excellent |
| **Jo 299.75** | **580** | | **18.7** | **Foam break** | **75** | **35,000** | **Small hairs in open.** |
| **Jo 299.75 LV** | **498** | | **19.5** | **Foam break** | **90** | **6,100** | **Excellent** |
| **Jo 297.90** | **566** | | **21** | **Foam break** | **108** | **6,500** | **Small hairs in open.** |
| **Jo 297.90 HV** | **546** | | **19** | **Foam break** | **115** | **20,000** | **Small hairs in open.** |
| **Jo 211-009** | **541** | | **19.9** | **Foam break** | **90** | **5,700** | **Excellent; best** |
| EMS 1702E | 486 | | 12.3 | Adhesive failure | 90 | high | Tiny hairs; poor bond |
| EMS 1477E | 352 | | 9 | Adhesive failure | 92 | 105,000 | Poor yarn bond |
| Gavazzi | | 149 | 27 | Adhesive failure | ? | ? | Excellent |
| **Jo 299.75** | | **542** | **18.7** | **100% foam break** | **75** | **35,000** | **Small hairs in open.** |
| **Jo 299.75 LV** | | **496** | **19.5** | **66% foam break** | **90** | **6,100** | **Excellent** |
| **Jo 297.90** | | **527** | **21** | **30% foam break** | **108** | **6,500** | **Small hairs in open.** |
| **Jo 297.90 HV** | | **521** | **19** | **17% foam break** | **115** | **20,000** | **Small hairs in open.** |
| **Jo 211-009** | | **506** | **19.9** | **50% foam break** | **90** | **5,700** | **Excellent; best** |
| EMS 1702E | | 343 | 12.3 | Adhesive failure | 90 | high | Tiny hairs; poor bond |
| EMS 1477E | | 295 | 9 | Adhesive failure | 92 | 105,000 | Poor bond |
| Gavazzi | Balsa 118 | | 27 | Adhesive failure | ? | ? | Excellent |
| **Jo 299.75** | **Balsa 534** | | **18.7** | **Balsa break** | **75** | **35,000** | **Small hairs in open.** |

In the data, the softening point is an important variable that one would want to maximize as it reduces the risk of roll blocking. Eliminating the risk of blocking would open the door to shipping fabric on its side; maximizing the number of rolls that can be stored on a container or truck; and therefore reduce the product cost component due to shipping. Viscosity is an important variable that one would want to maximize to prevent adhesive wicking during the adhesive coating step and through the customers nip process.

### Pilot Equipment Test data

Referring now to the data of Table 3, under the conditions of the 5 second roll on PVC foam, all Jowat adhesives failed by foam break or to a very small extent, fabric rupture. In other words, the adhesive bond between the foam and the scrim did not fail, and was stronger than the foam itself.

Under the conditions of the 5 second roll on PVC foam the Gavazzi fabric failed adhesively, with the warp yarns pulling off the specimen and leaving the weft yarns behind on the foam

Under the conditions of the 5 second roll on PVC foam the EMS copolyesters failed by adhesion to the foam but at a load well above the Gavazzi fabric. The adhesive add-on level was very low however and if it was closer to 20% the performance would likely be similar to the Jowat samples.

Under the conditions of the 2 second roll on PVC foam the Jowat 299.75 failed by foam break every time.

Under the conditions of the 2 second roll on PVC foam the other Jowat samples showed a combination of failure modes that was in proportion to the softening point of the adhesive; the lower the softening point, the higher the percentage of specimens that failed by foam fracture. In any case, the loads encountered in adhesive failure overlapped with those of foam failure and far exceeded the Gavazzi sample

Under the conditions of the 2 second roll on PVC foam the Gavazzi sample failed adhesively at a load that was lower than that seen in the 5 second roll test

Under the conditions of the 2 second roll on PVC foam the EMS samples failed adhesively at a load below that seen in the 5 second roll test but still well above the Gavazzi fabric

The EMS Copolyester type adhesives can outperform EVA in some applications on an adhesive weight basis. This would mean that the copolyester adhesive might be effective to form a bond at a lower level (areal weight). When this is done the EMS copolyester adhesives are better than the Gavazzi mesh. However, the EVA adhesives adhered just as well, and could be used at a greater add-on level and lower cost to give the fabric superior handling and cuttability. Further, the EVA adhesive provides superior stringing behavior (i.e., less stringing) than copolyester.

The performance of five Jowat EVA adhesives (bold font in Table 3; also shown in FIG. 8) was very close. Of these five, the Jowat 211-009 adhesive was designed to have a lower amount of legginess but it was not evident at high add-on levels. At the lower add-on level the benefit seemed to come through, as the legs coming off the gravure coater were the shortest seen in the trial. The adhesive also printed the most cleanly and distinctly on the fabric, and without bleed through. The softening point at 90° C is high enough to eliminate blocking risk. No bleeding was seen in the lab testing when the 2 kg steel roller was employed to make the specimens.

The Jowat 299.75 adhesive has the advantage of very high viscosity and a softening point of 75° C. It is very easy to activate the adhesive even at short roll times and the adhesive is very aggressive to foam and balsa. There was a small amount of the adhesive protruding into the opening of the fabric. The adhesive did not bleed through the fabric in testing, nor was it picked up by the steel roller.

A lower viscosity version of 299.75 was made called EXP 211-005. Although it has a much lower viscosity it has a higher softening point of 90 C. The quality of the fabric made from this adhesive was extremely high. This adhesive in terms of performance and quality was very close to the 211-009.

Some embodiments described herein can be used at a lower application temperature than a mesh having a water based adhesive. For example, printed hot melt EVA adhesives maybe applied at 102.8°C (217 °F) versus 148.9°C (300 °F) for some water based EVA adhesives. Reducing the roll temperature allows the adhesives to stay viscous enough to remain at the bond line under the pressure of the roll without wicking through the fabric. The process described herein still results in an excellent bond of fabric to contourable core material at the lower temperature. Lower application temperatures will result in energy savings for the contourable core manufacturer.

Some embodiments described herein permit printing the hot melt adhesive at faster line speeds than are possible with water based adhesives. For example, a gravure type printing machine can be run at very high speeds and the adhesive pickup is independent of line speed. The rapid activation behavior of the hot melt adhesives would also allow for higher line speeds at the contourable core manufacturers..

One of ordinary skill can employ a number of variations from the details of the examples described above. For example:
a. Textured fiberglass yarns may be used to increase the surface contact area of the mesh to the core material 204.
b. More open constructions may be used to increase penetration of resin 305 through the fabric 100 to the core material 204.
c. Higher performing fibers such as Aramid or carbon or the like may be used.
d. The hot melt adhesives 108 may be a higher performing such as copolyesters or polyamide, or the like may provide better affinity for the resins 305 that join the skin 304 to the scrim 100.
e. Different weave patterns may be used. The example described above is a plain woven fabric but other weaves, such as weft inserted warp knit (WIWK) fabrics have generally higher strength than plain woven fabrics. Other weaves, such as, but not limited to multi-axial fabric may also be used.

Although the subject matter has been described in terms of exemplary embodiments, it is not limited thereto.

## Claims

1. A method comprising:
providing an open weave fiber glass scrim (102); and
printing a discontinuous pattern of an adhesive (108) on a major surface of the open weave fiber glass scrim (102), **characterized in that** the adhesive (108) is a hot melt adhesive (108) having sufficient viscosity at an application temperature used during the printing step to avoid wicking through the scrim (102).

2. The method of claim 1, wherein the adhesive (108) has a softening point in a range from 60 °C to 140 °C.

3. The method of claim 1, wherein the adhesive (108) has a softening point in a range from 60 °C to 90 °C.

4. The method of any preceding claim, wherein the viscosity of the adhesive (108) at the application temperature is in a range from 1,000 to 150,000 centipoises at 191 °C.

5. The method of any preceding claim, wherein the providing step includes forming the scrim (102) using a dry warped beam.

6. The method of any preceding claim, wherein the scrim (102) is a greige scrim (102).

7. The method of any preceding claim, wherein the printing step comprises a gravure process.

8. The method of claim 7, wherein the gravure process includes using a gravure roll (404) having from 10 to 55 parallel engraved lines (502, 504) per inch (4 to 22 parallel lines per centimeter) in at least one direction.

9. The method of claim 8, wherein the lines (502, 504) form a diamond pattern, and the lines (502, 504) are oriented at an angle from 30 degrees to 60 degrees from a machine direction of the scrim (102).

10. The method of claim 7, wherein the gravure process includes using a gravure roll (404) and the method further comprises directing hot air using a hot air knife (403) directed at a gap between the gravure roll (404) and the scrim (102).

11. The method of claim 7, wherein the gravure process includes using a gravure roll (404) and the method further comprises using a hot wire to cut one or more strings of adhesive (108) that form during the gravure process.

12. The method of claim 1, wherein the printing step includes applying the adhesive (108) with an average area density of 5 grams/meter² to 28 grams/meter².

13. A product (100) formed by the method of any preceding claim, wherein the product (100) comprises:
an open weave fiber glass scrim (102); and
a discontinuous pattern of an adhesive (108) **characterized in that** the adhesive (108) is a hot melt adhesive (108) applied on one side of the open weave fiber glass scrim (102) without bleeding through the scrim (102).

14. A method of using the product (100) of claim 13, comprising:
laminating the scrim (102) to at least one panel (202) from the group consisting of expanded polymer foam and wood, with the adhesive (108) joining the scrim (102) to the at least one panel (202); and
slitting the at least one panel (202) in two directions without slitting the scrim (102) to form a contourable core material (200) having a plurality of blocks (204) attached to the scrim (102).

15. The method of claim 14, further comprising:
laminating a facing sheet on a major face of the contourable core material (200).

## Patentansprüche

1. Verfahren, das umfasst:
Bereitstellen eines grobgewebten Glasgittergewebes (102); und
Drucken eines nicht durchgehenden Musters eines Klebstoffs (108) auf eine Hauptoberfläche des grobgewebten Glasgittergewebes (102), **dadurch gekennzeichnet, dass** der Klebstoff (108) ein Heißklebstoff (108) mit ausreichender Viskosität bei einer Anwendungstemperatur ist, die während des Druckschritts verwendet wird, um eine Dochtwirkung durch das Gittergewebe (102) zu vermeiden.

2. Verfahren nach Anspruch 1, wobei der Klebstoff (108) einen Erweichungspunkt in einem Bereich von 60 °C bis 140 °C aufweist.

3. Verfahren nach Anspruch 1, wobei der Klebstoff (108) einen Erweichungspunkt in einem Bereich von 60 °C bis 90 °C aufweist.

4. Verfahren nach einem vorstehenden Anspruch, wobei die Viskosität des Klebstoffs (108) bei der Anwendungstemperatur in einem Bereich von 1000 bis 150.000 Centipoise bei 191 °C liegt.

5. Verfahren nach einem vorstehenden Anspruch, wobei der Schritt des Bereitstellens das Bilden des Gittergewebes (102) unter Verwendung eines trockenen gewölbten Balkens beinhaltet.

6. Verfahren nach einem vorstehenden Anspruch, wobei das Gittergewebe (102) ein Rohgittergewebe (102) ist.

7. Verfahren nach einem vorstehenden Anspruch, wobei der Schritt des Druckens einen Tiefdruckprozess umfasst.

8. Verfahren nach Anspruch 7, wobei der Tiefdruckprozess das Verwenden einer Tiefdruckwalze (404) mit 10 bis 55 parallel eingravierten Linien (502, 504) pro Zoll (4 bis 22 parallelen Linien pro Zentimeter) in zumindest eine Richtung beinhaltet.

9. Verfahren nach Anspruch 8, wobei die Linien (502, 504) ein Rautenmuster bilden und wobei die Linien (502, 504) in einem Winkel von 30 Grad bis 60 Grad zu einer Maschinenrichtung des Gittergewebes (102) ausgerichtet sind.

10. Verfahren nach Anspruch 7, wobei der Tiefdruckprozess das Verwendung einer Tiefdruckwalze (404) beinhaltet und das Verfahren ferner das Richten von Heißluft unter Verwendung eines Heißluftmessers (403) umfasst, das auf einen Spalt zwischen der Tiefdruckwalze (404) und dem Gittergewebe (102) gerichtet ist.

11. Verfahren nach Anspruch 7, wobei der Tiefdruckprozess das Verwendung einer Tiefdruckwalze (404) beinhaltet und das Verfahren ferner das Verwenden eines heißes Drahts umfasst, um einen oder mehrere Fäden des Klebsstoffs (108) zu schneiden, die sich während des Tiefdruckprozesses bilden.

12. Verfahren nach Anspruch 1, wobei der Schritt des Druckens das Anwenden eines Klebstoffs (108) mit einer durchschnittlichen Flächendichte von 5 g/m² bis 28 g/m² beinhaltet.

13. Produkt (100), das mit dem Verfahren nach einem vorstehenden Asnpruch gebildet ist, wobei das Produkt (100) umfasst:
ein grobgewebtes Glasgittergewebe (102); und
ein nicht durchgehendes Musters eines Klebstoffs (108), **dadurch gekennzeichnet, dass** der Klebstoff (108) ein Schmelzklebstoff (108) ist, der auf einer Seite des grobgewebten Glasgittergewebes (102) aufgetragen ist, ohne durch das Gittergewebe (102) auszulaufen.

14. Verfahren zum Verwenden des Produkts (100) nach Anspruch 13, das umfasst:
Laminieren des Gittergewebes (102) auf zumindest ein Panel (202) aus der Gruppe, bestehend aus expandiertem Polymerschaum und Holz, wobei der Klebstoff (108) das Gittergewebe (102) mit dem zumindest einem Panel (202) verbindet; und
Schlitzen des zumindest eines Panels (202) in zwei Richtungen, ohne das Gittergewebe (102) zu schlitzen, um ein konturierbares Kernmaterial (200) mit einer Mehrzahl von Blöcken (204) zu bilden, die am Gittergewebe (102) angebracht sind.

15. Verfahren nach Anspruch 14, das ferner umfasst:
Laminieren einer Deckfolie auf eine Hauptoberfläche des konturierbaren Kernmaterials (200).

## Revendications

1. Procédé comprenant les étapes consistant à :
produire une toile de fibre de verre à armure à jour (102) ; et
imprimer un motif discontinu d'un adhésif (108) sur une surface principale de la toile de fibre de verre à armure à jour (102), **caractérisé en ce que** l'adhésif (108) est un adhésif thermofusible (108) ayant une viscosité suffisante à une température d'application utilisée pendant l'étape d'impression afin d'éviter la formation de mèches à travers la toile (102).

2. Procédé selon la revendication 1, dans lequel l'adhésif (108) présente un point de ramollissement dans la gamme de 60°C à 140°C.

3. Procédé selon la revendication 1, dans lequel l'adhésif (108) a un point de ramollissement dans la gamme de 60°C à 90°C.

4. Procédé selon l'une quelconque des revendications précédentes, dans lequel la viscosité de l'adhésif (108) à la température d'application est dans une gamme de 1000 à 150 000 centipoises à 191°C.

5. Procédé selon l'une quelconque des revendications précédentes, dans lequel l'étape de production comprend la formation de la toile (102) à l'aide d'une ensouple de chaîne sec.

6. Procédé selon l'une quelconque des revendications précédentes, dans lequel la toile (102) est une toile écrue (102).

7. Procédé selon l'une quelconque des revendications précédentes, dans lequel l'étape d'impression comprend un processus de gravure.

8. Procédé selon la revendication 7, dans lequel le processus de gravure comprend l'utilisation d'un rouleau de gravure (404) comportant 10 à 55 lignes gravées (502, 504) parallèles par pouce (4 à 22 lignes parallèles par centimètre) dans au moins une direction.

9. Procédé selon la revendication 8, dans lequel les lignes (502, 504) forment un motif en losange, et les lignes (502, 504) sont orientées sous un angle de 30 degrés à 60 degrés par rapport à une direction de la toile (102) dans la machine.

10. Procédé selon la revendication 7, dans lequel le processus de gravure comprend l'utilisation d'un rouleau de gravure (404) et le procédé comprend en outre l'étape consistant à diriger de l'air chaud l'aide d'une lame d'air chaud (403) dirigée au niveau d'un espace situé entre le rouleau de gravure (404) et la toile (102).

11. Procédé selon la revendication 7, dans lequel le processus de gravure comprend l'utilisation d'un rouleau de gravure (404) et le procédé comprend en outre l'utilisation d'un fil chaud pour couper un ou plusieurs cordons d'adhésif (108) qui se forment au cours du processus de gravure.

12. Procédé selon la revendication 1, dans lequel l'étape d'impression comprend l'application de l'adhésif (108) avec une densité de surface moyenne de 5 grammes/mètre² à 28 grammes/mètre².

13. Produit (100) formé par le procédé selon l'une quelconque des revendications précédentes, dans lequel le produit (100) comprend :
une toile de fibre de verre à armure à jour (102) ; et
un motif discontinu d'un adhésif (108), **caractérisé en ce que** l'adhésif (108) est un adhésif thermofusible (108) appliqué sur un côté de la toile de fibre de verre à armure à jour (102) sans dégorgement à travers la toile (102).

14. Procédé d'utilisation du produit (100) selon la revendication 13, comprenant les étapes consistant à :
stratifier la toile (102) pour former au moins un panneau (202) à partir du groupe constitué de mousse de polymère expansé et de bois, l'adhésif (108) reliant la toile (102) à l'au moins un panneau (202) ; et
fendre l'au moins un panneau (202) dans deux directions sans fendre la toile (102) pour former un matériau central profilable (200) comportant une pluralité de blocs (204) fixés à la toile (102).

15. Procédé selon la revendication 14, comprenant en outre l'étape consistant à :
stratifier une feuille de parement sur une face principale du matériau central profilable (200).
